# FASCICULE DE BREVET EUROPEEN

(11) **EP 2 282 223 B1**
(45) Date de publication et mention de la délivrance du brevet: **09.05.2012**
(21) Numéro de dépôt: 10171773.4
(22) Date de dépôt: 03.08.2010
(51) Int. Cl.: G01S 7/298, G01S 7/04

(54) **Procédé d'affichage d'une image radar**
Anzeigeverfahren eines Radarbilds
Method for displaying a radar image

(30) Priorité: 04.08.2009 FR 0903847
(43) Date de publication de la demande: 09.02.2011
(73) Titulaire: Thales, 92200 Neuilly Sur Seine (FR)
(72) Inventeur: Breban, Rémi, 33160, SAINT AUBIN DE MEDOC (FR); Marchal, Sylvain, 33000, BORDEAUX (FR); Espaignet, Thomas, 33150, CENON (FR)
(74) Mandataire: Lucas, Laurent Jacques

(56) Documents cités:
- WO-A1-2007/035484
- US-A- 5 519 401
- US-A- 5 867 121

## Description

La présente invention concerne le domaine de la génération d'une image radar ou une image de terrain s'appliquant dans les dispositifs aéronautiques destinés notamment aux aéronefs. Plus particulièrement, le domaine de l'invention concerne les images générées à partir d'un balayage circulaire générant une image conique sur un écran.

Actuellement, les images générées dans des afficheurs à balayage circulaire disposés dans des cockpits permettent d'afficher une image décomposée en une pluralité de parties sensiblement coniques définies par une distance à un point et un angle. Typiquement, une image est décomposée en un certain nombre de secteurs angulaires entre deux angles TETAₙ et TETAₙ₊₁, les secteurs étant affichés successivement. Dans chaque secteur angulaire une couronne est définie entre deux rayons Rₚ et Rₚ₊₁. On parlera de la couronne Cₙp dans le reste de la description.

La couronne Cₙₚ comporte donc une partie de l'image affichée et rafraichie à chaque fois que le balayage de l'afficheur arrive à l'angle TETAₙ.

Se pose donc le problème du tracé de l'image dans la portion d'images contenu dans la couronne Cₙₚ.

Aujourd'hui, les calculateurs usuellement utilisés comportent une certaine capacité de performance et permettent de réaliser un tracé d'image d'une précision donnée à partir d'une taille d'image définie qui doit être affichée.

Généralement, un choix de configuration du calculateur doit être effectué selon le rapport entre la performance du calculateur et la précision du tracé ou encore la taille de l'image.

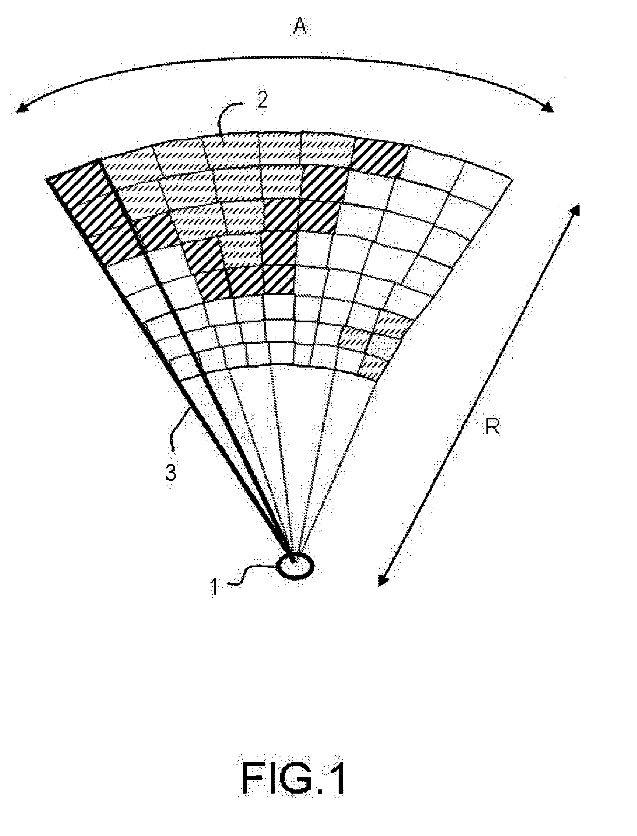

La figure 1 représente un affichage classique d'une image générée par balayage circulaire. Généralement, notamment dans les applications aéronautiques, l'image générée comporte 512 tranches circulaires et de 512 secteurs angulaires 3 qui ne sont pas tous représentés sur la figure 1.

L'image générée peut comprendre des niveaux de couleurs, par exemple relatifs à un niveau de danger dans le cas d'une application TAWS ou relatifs à des conditions environnementales dans le cas d'une application d'un radar WXR.

L'image totale est affichée sur un rayon R et sur une portion angulaire A. L'image est donc composée d'une pluralité de couronnes 2. La position de chaque couronne peut être repérée par un double indice n p, désignant un rayon et un angle compris dans la portion angulaire.

Un des problèmes majeurs de l'affichage par l'intermédiaire d'un balayage linéaire ou circulaire d'une image conique est la disponibilité de la ressource de calculs nécessaire.

Dans les dispositifs existants le tracé d'une image est réalisé essentiellement par une fonction qui détermine quels sont les pixels qui appartiennent à la couronne. Cette analyse est couteuse en temps de calcul car elle réalise une analyse pixel par pixel.

Dans le cas d'une application TAWS, chaque couronne comporte une couleur représentant un niveau de danger relatif à la proximité du relief.

On connaît de l'état de la technique le document US5867121 qui divulgue un système de conversion d'un scan radar. L'objet de l'invention est de transformer les informations d'un scan radar conventionnel dont les données sont en coordonnées polaires pour afficher le scan radar dans un repère en coordonnées cartésiennes. Pour l'affichage d'une couronne chaque pixel est calculé et est affiché. Une couronne est donc affichée par lecture des données correspondant à chaque pixel appartenant à la dite couronne.

Un problème de la génération des images selon les techniques de l'art antérieur est que selon la taille de la couronne, la puissance de calcul nécessaire pour générer une image conique à partir de l'image du radar transmise sous la forme d'une matrice rectangulaire est couteuse et ne s'adapte pas à la taille de la couronne. Hors selon la taille de la couronne qui peut être inférieure au pixel, de l'ordre du pixel ou plus grande qu'un pixel, le mode de calcul du tracé de l'image reste le même. Il n'existe pas d'adaptation du tracé de l'image selon la taille des couronnes à afficher.

L'invention permet de pallier aux inconvénients précités.

L'invention permet de pallier à ce problème en évaluant un tracé d'une enveloppe rectangulaire propre à chaque couronne d'une image conique afin de la comparer à une surface de référence, appelée grain.

Selon les valeurs des surfaces comparées, le procédé de l'invention permet de calculer :
■ soit le tracé de la couronne à partir d'une fonction permettant de déterminer quels pixels appartiennent à la couronne ;
■ soit le tracé d'une approximation du tracé de la couronne par l'enveloppe rectangulaire prédéfinie et propre chaque couronne.

Ainsi, l'invention permet de configurer une variable, appelée grain, qui permet de générer une image conique en optimisant, selon l'application, le meilleur compromis entre la puissance de calcul, la taille de l'image à afficher et la précision du tracé.

Avantageusement, le procédé de génération d'une image en forme d'une portion de disque sur un afficheur, la portion de disque comprenant un centre et un rayon maximal définissant une limite de l'image générée, la portion de disque comprenant une pluralité de secteurs angulaires, chaque secteur angulaire comportant une pluralité de surfaces disjointes, chaque surface disjointe d'un secteur angulaire étant délimitée par deux arcs de cercles définis entre deux rayons et deux droites formées respectivement par deux segments appartenant aux deux coté du secteur angulaire, lesdites surfaces étant appelées "couronnes", chacune des couronnes ayant une enveloppe rectangulaire prédéfinie et attribuée dont la surface est sensiblement proche de la surface de la couronne, caractérisé en ce que le procédé, au moyen d'un calculateur, comprend :
■ une première étape de sélection d'une couronne ;
■ une seconde étape de comparaison de la surface de l'enveloppe rectangulaire attribuée à la couronne sélectionnée à au moins une valeur prédéfinie, nommée grain ;
■ une troisième étape de génération du tracé d'une enveloppe correspondant à ladite couronne.

Avantageusement, le grain est une surface carrée dont le coté comprend une pluralité de pixels.

Avantageusement, le grain est une donnée d'entrée configurable du procédé de l'invention.

Avantageusement, l'image d'une couronne est monochrome.

Avantageusement, si la taille du grain est plus grande que l'enveloppe rectangulaire de la couronne sélectionnée lors du calcul de la seconde étape, la troisième étape est réalisée au moyen d'une première fonction générant une image dont les limites correspondent au tracé de l'enveloppe rectangulaire de la couronne sélectionnée

Avantageusement, si la taille du grain est plus petite que l'enveloppe rectangulaire lors du calcul de la seconde étape, la troisième étape est réalisée au moyen d'une seconde fonction générant une image dont les limites correspondent au tracé de la couronne.

Avantageusement, la première fonction détermine des segments de l'image appartenant à l'enveloppe rectangulaire de la couronne sélectionnée, un segment étant défini par une portion de ligne horizontale ou verticale dont des pixels appartiennent à la couronne.

Avantageusement, la première fonction comprend :
■ une étape de sélection de la première ligne de l'enveloppe rectangulaire définissant un segment ;
■ une étape de définition d'un segment correspondant à la ligne sélectionnée ;
■ une étape de sélection de la ligne suivante et de réitération des deux étapes précédentes jusqu'à ce que le dernier segment de l'enveloppe rectangulaire soit défini ;
■ une étape de tracé des segments de l'image contenu dans l'enveloppe rectangulaire de la couronne.

Avantageusement, la seconde fonction détermine pour chacun des pixels de l'enveloppe rectangulaire de la couronne sélectionnée, lesquels appartiennent à la couronne, l'image générée comprenant tous les pixels appartenant à la couronne.

Avantageusement, la seconde fonction comprend :
■ une étape de sélection de la première ligne de l'enveloppe rectangulaire d'une couronne ;
■ une étape de génération d'un premier segment de la première ligne comprenant des pixels appartenant à la couronne ;
■ une étape de sélection de la ligne suivante et de réitération des deux précédentes étapes jusqu'à ce que la dernière ligne soit traitée ;
■ une étape de génération de l'image contenue dans la couronne.

Avantageusement, l'étape de génération d'un segment comprend :
■ une étape de sélection du premier pixel de la ligne sélectionnée ;
■ une étape de mise à jour du segment à générer avec le pixel sélectionné ;
■ une étape de sélection du pixel suivant de la ligne sélectionnée et de réitération de l'étape précédente, jusqu'à ce que le dernier pixel sélectionné soit entièrement traité.

Avantageusement, lorsque tous les tracés de chaque couronne d'un secteur angulaire ont été générés, le procédé comprend une étape de génération d'une image, notée bitmap, du secteur angulaire et une étape d'affichage de l'image sur un afficheur.

Avantageusement, lorsque tous les tracés de chaque couronne d'un secteur angulaire ont été générés, le procédé comprend une étape de sélection d'une couronne du secteur angulaire suivant, le procédé étant réitéré.

D'autres caractéristiques et avantages de l'invention apparaîtront à l'aide de la description qui suit, faite en regard des dessins annexés qui représentent :
- la figure 1 : une image générée par balayage circulaire selon l'art antérieur ;
- la figure 2 : un recouvrement de pixels de deux enveloppes rectangulaires affichées successivement ;
- la figure 3 : deux exemples de définition de valeurs de grains selon l'invention ;
- la figure 4 : des étapes du procédé selon l'invention permettant de définir l'enveloppe d'une couronne ;
- la figure 5 : des étapes du procédé selon l'invention permettant de réaliser l'approximation de la couronne par une enveloppe rectangulaire ;
- la figure 6 : des étapes du procédé selon l'invention permettant de réaliser le tracé de la couronne.

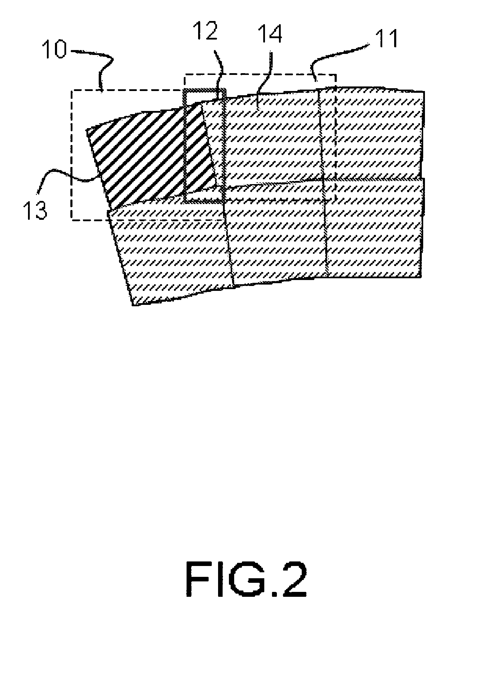

La figure 2 représente le tracé des enveloppes rectangulaires 10 et 11 respectivement des couronnes 13 et 14. L'enveloppe rectangulaire est une donnée déterminée pour chacune des couronnes. On appelle par enveloppe la surface rectangulaire d'un contour formant un rectangle. La surface rectangulaire couvre la surface de la couronne et peut être supérieure à la surface de la couronne de quelques pixels en largeur et en longueur.

Lorsque le tracé d'une couronne est approximé par le tracé de son enveloppe rectangulaire, un recouvrement 12 peut se produire. Les pixels de l'image appartenant à la zone du recouvrement 12 appartiennent aux deux enveloppes rectangulaires des deux couronnes 10, 11 partageant un coté en commun.

Lors d'un balayage circulaire affichant l'image, les pixels compris dans la zone de recouvrement 12 s'affichent successivement selon leur définition dans l'enveloppe rectangulaire, tout d'abord selon la couleur de la couronne 13 appartenant au premier secteur angulaire balayé puis selon la couleur de la couronne 14 appartenant au secteur balayé suivant. Un même pixel appartenant à deux enveloppes rectangulaires différentes peut donc changer de couleur lors du balayage selon l'attribution de la couleur qui lui est faite dans l'approximation de chaque enveloppe rectangulaire.

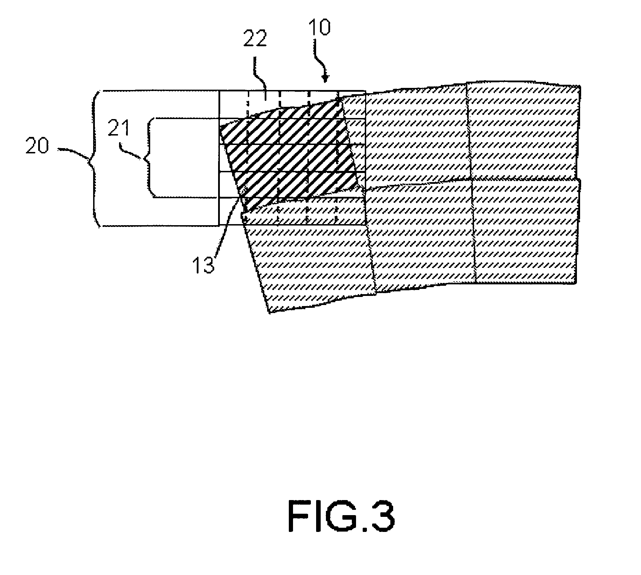

La figure 3 représente l'enveloppe rectangulaire 10 de la couronne 13 et un quadrillage comprenant des surfaces 22 définissant les pixels de l'image, notamment de la partie de l'image formée par la couronne 13.

L'invention permet de définir une valeur de référence, appelée grain, cette valeur comprend un nombre déterminé de pixels et correspond à une surface. Dans un mode de réalisation privilégié, le grain est une valeur correspondant à une surface carrée.

On appelle par exemple un grain 3, la surface comprenant 9 pixels formant un carré 3x3.

On appelle de la même manière un grain 5, dit grain élevé, la surface comprenant 25 pixels formant un carré 5x5.

La figure 3 représente un grain 3 dont le coté 21 comprend trois pixels et représente un grain 5 dont le coté 20 comprend cinq pixels.

Selon la valeur du grain choisie, deux cas se présentent dans le procédé de l'invention. La taille du grain peut être plus grande que la taille de l'enveloppe rectangulaire ou inversement.

Par exemple, lorsque l'on considère les couronnes proches du centre telles que représentées sur la figure 1, leur enveloppe rectangulaire est plus petite que l'enveloppe rectangulaire des couronnes situées en périphérie de l'image.

Un grain est fixé pour la définition de l'image entière affichée sur l'imageur.

Le procédé de l'invention comprend donc une étape de sélection d'une couronne, notée p^{ieme} couronne, et une étape de comparaison qui permet de comparer la taille de l'enveloppe rectangulaire de la p^{ieme} couronne avec la taille du grain. Cette dernière étape est réalisée avant la génération du tracé de l'image correspondant à la couronne sélectionnée.

On note "bitmap", l'image comprenant un ensemble d'images de couronnes d'un même secteur angulaire. La bitmap est transmise à l'afficheur lorsque toutes les couronnes d'un secteur angulaire ont été traitées.

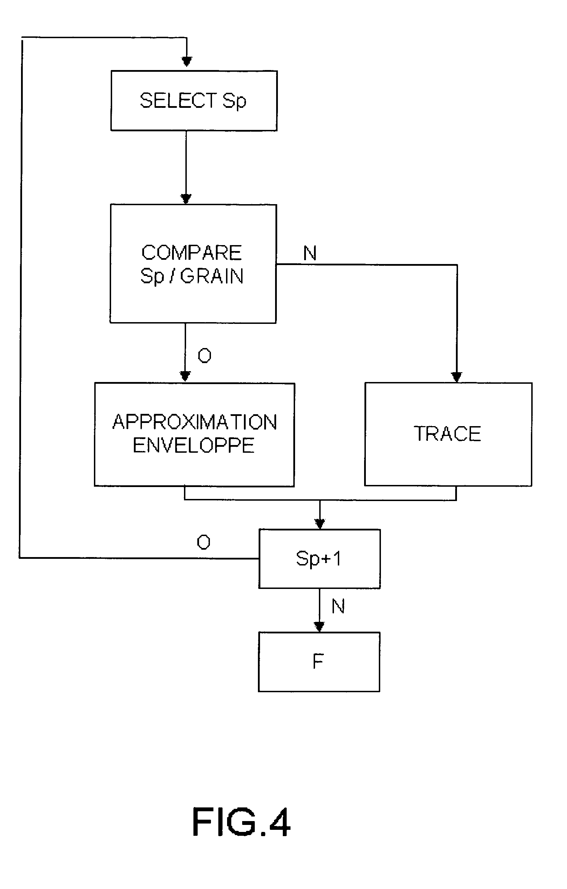

L'étape de sélection d'une couronne est représentée figure 4 par l'étape SELECT Sp qui correspond à la sélection de la p^{ieme} couronne d'un secteur angulaire. L'étape de comparaison, notée COMPARE Sp / GRAIN dans la figure 4, succède à l'étape de sélection. Cette étape de comparaison permet donc de comparer l'enveloppe rectangulaire d'une couronne avec la taille du grain.

Si la taille du grain est plus grande que l'enveloppe rectangulaire de la p^{ieme} couronne, alors le procédé de l'invention comprend une troisième étape. Cette troisième étape, notée APPROXIMATION ENVELOPPE dans la figure 4, lance une première fonction qui permet de tracer l'enveloppe rectangulaire de la couronne sélectionnée.

L'image de la couronne générée dans l'afficheur est donc contenue dans une enveloppe rectangulaire telle que l'enveloppe 10 ou 11 de la figure 2. La couronne est dans ce cas approximée par l'enveloppe rectangulaire qui est prédéfinie. Chaque couronne possède une enveloppe rectangulaire prédéfinie qui lui est attribuée.

Dans ce dernier cas, la première fonction permet de déterminer les segments de l'image appartenant à l'enveloppe rectangulaire dont il faut générer le tracé.

Cette première fonction est moins coûteuse que la deuxième fonction, décrite si après, et permet d'économiser sur le temps de calcul. En effet, le calculateur n'exécute pas la partie lourde de l'algorithme réalisant l'analyse pixels par pixels nécessaire pour générer une image conique qui correspond généralement à un tracé non rectangulaire.

Deux enveloppes rectangulaires pouvant se chevaucher, certains pixels peuvent être tracés deux fois comme décrit précédemment. En conséquence, la taille de l'image générée augmente.

Dans la configuration où la surface de l'enveloppe rectangulaire de la couronne est plus petite que la valeur, appelée grain, alors le procédé remplace la couronne par son enveloppe rectangulaire. Le tracé de l'image est donc une approximation du tracé de la couronne par son enveloppe rectangulaire.

Si la taille du grain est plus petite que l'enveloppe rectangulaire de la couronne sélectionnée, alors le procédé de l'invention comprend une 4eme étape, appelée TRACE, qui permet de lancer une seconde fonction permettant de déterminer le tracé de la couronne.

Cette seconde fonction permet notamment de déterminer quels sont les pixels de l'enveloppe rectangulaire attribuée à p^{ième} la couronne qui appartiennent à ladite couronne. Notamment, cette seconde fonction permet de déterminer quels sont les segments de l'enveloppe rectangulaire qui comprennent des pixels appartenant à la p^{ième} couronne.

Seuls les segments identifiés appartenant à la couronne seront tracés pour générer l'image de la couronne.

Cette seconde fonction permet donc de construire moins de segments, un contrôle de chaque position de chacun des pixels étant réalisé pour savoir s'il appartient à la p^{ième} couronne. De ce fait, la taille de l'image générée de la couronne est réduite par rapport à l'image générée contenue dans l'enveloppe rectangulaire correspondant au tracé de la première fonction.

En outre, la qualité de l'image générée est de meilleure qualité lors du tracé à partir de la seconde fonction. Le tracé est plus précis car seuls les pixels appartenant à la couronne prennent la couleur de la cellule.

La quatrième étape est appelée TRACE dans la figure 4.

Le procédé de l'invention réitère la seconde étape par la sélection d'une autre couronne, notée Sₚ₊₁ jusqu'à ce que les tracés de toutes les couronnes du secteur angulaire soient générées.

.Le procédé est alors terminé à partir d'une étape final notée F.

Le procédé peut être alors rebouclé pour le rafraichissement et l'affichage d'une autre image d'un autre secteur angulaire.

Un avantage de la solution de l'invention est de générer une image totale ayant un bon compromis entre la ressource de calcul utilisée et la taille de l'image générée ainsi que sa qualité.

En effet, pour une valeur de grain donnée, plus les couronnes sont petites et proches du centre de l'imageur, plus l'enveloppe rectangulaire est potentiellement plus petite que la taille du grain et le tracé de l'image nécessite moins de puissance de calcul.

Réciproquement, plus les couronnes sont grandes et éloignées du centre de l'imageur, plus l'enveloppe rectangulaire est potentiellement plus grande que la taille du grain. Dans ce cas, la couronne est tracée avec une grande précision, la taille de l'image générée dans la couronne est plus petite que si elle était générée dans l'enveloppe rectangulaire et enfin la puissance de calcul nécessaire est plus importante.

Selon les applications, la valeur du grain peut être configurée de manière à déterminer le meilleur compromis entre la taille de l'image, la puissance de calcul et la précision du tracé.

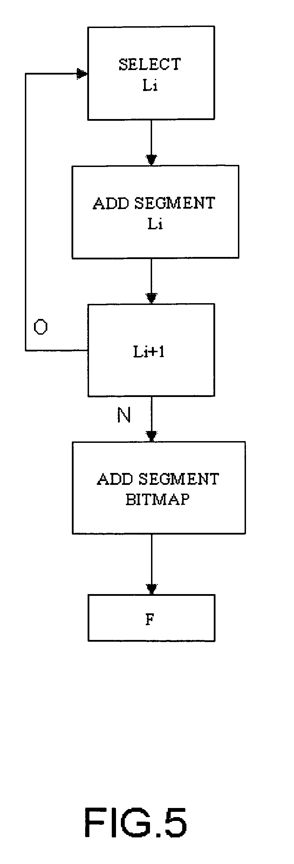

La figure 5 représente le séquencement des étapes détaillées réalisées par la première fonction de l'étape APPROXIMATION ENVELOPPE. La première fonction réalise une approximation du tracé de la couronne en la remplaçant par son enveloppe rectangulaire et génère une image comprise dans cette enveloppe.

Une première étape réalisée par la première fonction est de sélectionner une ligne de l'enveloppe rectangulaire de la p^{ieme} couronne en commençant par la première ligne de l'enveloppe rectangulaire. Cette étape est notée SELECT Lᵢ sur la figure 5.

Une seconde étape est de définir un segment de pixels de la ligne sélectionnée dont la taille est égale à la longueur joignant les deux cotés opposés de l'enveloppe rectangulaire.

Une troisième étape de la réalisation de la première fonction est de déterminer si l'enveloppe comprend une autre ligne Lᵢ₊₁ consécutive à la ligne en cours de traitement.

S'il s'agit de la dernière ligne de la couronne, alors un calculateur ajoute les segments constituant l'enveloppe traitée à ceux des autres enveloppes appartenant au secteur angulaire.

Si en revanche il ne s'agit pas de la dernière ligne de la couronne alors la fonction incrémente la ligne de l'enveloppe rectangulaire à traiter.

Enfin, la réalisation de la tache de la première fonction comprend une dernière étape notée F dans la figure 5 lorsque l'analyse des segments de l'enveloppe est terminée.

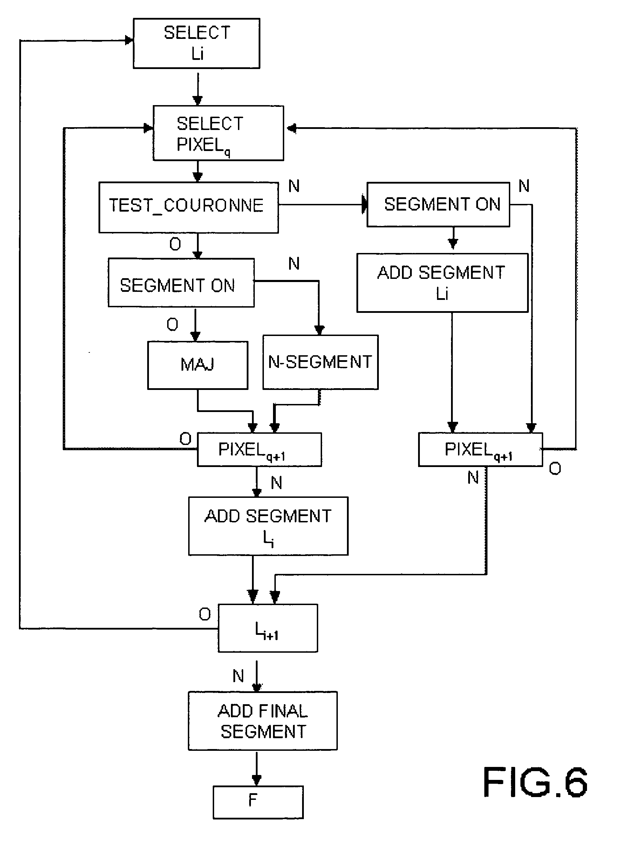

La figure 6 représente le diagramme de séquences des taches réalisées par la seconde fonction de l'étape TRACE.

La seconde fonction sélectionne une ligne de l'enveloppe rectangulaire de la p^{ieme} couronne en commençant par la première ligne et effectue un traitement pour chaque ligne de l'enveloppe rectangulaire jusqu'à la dernière ligne.

La première étape, notée SELECT Lᵢ, de la tache réalisée par la seconde fonction est de sélectionner une ligne de l'enveloppe rectangulaire d'une couronne. Considérons le traitement de la ligne Lᵢ de la p^{ieme} enveloppe rectangulaire d'une couronne de l'image générée.

Une deuxième étape, notée SELECT PIXEL_{q}, réalisée par la seconde fonction comprend la sélection d'un pixel de la ligne.

Une troisième étape, notée TEST_COURONNE, de détermination de la position du pixel permet de déterminer si le pixel appartient à la couronne.

Si le pixel appartient à la couronne, la seconde fonction réalise une quatrième étape, notée SEGMENT ON, d'analyse si un segment est déjà défini pour cette ligne. Si le segment existe déjà, c'est-à-dire que des pixels de la couronne appartiennent au segment, alors la taille du segment est ajustée avec le pixel sélectionné dans une cinquième étape. Cette cinquième étape est notée MAJ.

Si, en revanche, le segment n'est pas défini, la seconde fonction crée un nouveau segment dans une sixième étape, notée N_SEGMENT.

Enfin la seconde fonction réalise une septième étape, notée PIXELq₊₁, qui détermine s'il reste un autre pixel dans la ligne. Si oui elle recommence la seconde étape de sélection du prochain pixel, sinon dans huitième étape, notée ADD SEGMENT Lᵢ, la seconde fonction génère le segment correspondant à la ligne Lᵢ de la p^{iem}_{,} couronne. Chacun des pixels du segment appartiennent à la couronne.

Dans une treizième étape, notée Lᵢ₊₁, la seconde fonction détermine s'il reste une autre ligne à traiter dans la p^{ieme} enveloppe rectangulaire de la couronne.

A l'issue de la troisième étape, si le pixel n'appartient pas à la couronne, la seconde fonction réalise une dixième étape, notée SEGMENT ON, d'analyse si un segment est déjà défini. Si le segment existe déjà, alors la seconde fonction réalise une onzième étape, notée ADD SEGMENT Lᵢ, d'ajout du segment à l'image, sinon la seconde fonction réalise une douzième étape, notée PIXELⱼ₊₁, de détermination du prochain pixel à traiter.

S'il reste des pixels à traiter sur la ligne, la seconde fonction recommence la deuxième étape, sinon elle poursuit la treizième étape comprenant la détermination de la prochaine ligne à traiter.

S'il reste une autre ligne à traiter, alors la seconde fonction réalise la première étape SELECT Lᵢ de sélection de la prochaine ligne, sinon elle ajoute le dernier segment de l'image de l'enveloppe de rectangulaire de la p^{ieme} couronne dans une quatorzième étape, notée ADD FINAL SEGMENT.

Enfin une dernière étape, notée F, permet de déterminer la fin de la tache de la seconde fonction.

Un avantage de l'invention est de pouvoir notamment configurer, selon les applications, la taille du grain pour répondre au meilleur compromis entre la puissance de calcul, la taille de l'image à afficher et la précision du tracé.

Dans un cas de réalisation la taille du grain peut être nulle, auquel cas la seconde fonction générera le tracé de chaque couronne de l'image, au détriment de la performance du calculateur.

Dans une autre configuration, il est possible de paramétrer un grain élevé de telle manière que la première fonction génère un tracé de chaque couronne en réalisant une approximation de son contour par une enveloppe rectangulaire. Dans ce dernier cas de figure, chaque couronne affichée est remplacée par une enveloppe rectangulaire, au détriment de la taille de bitmap et de la qualité de l'image générée.

L'invention possède l'avantage de proposer une grande flexibilité selon l'application nécessitant d'afficher une image conique comportant une pluralité de couronnes telles que définies précédemment et selon le contexte d'utilisation de cette application.

Dans le cas d'une définition d'un grain de taille moyenne, l'image conique générée est de type hybride, c'est-à-dire :
■ qu'un premier ensemble de couronnes sont tracées selon leur contour originel de manière à obtenir un tracé précis, une taille d'image tracée réduite, les pixels étant tracés une seule fois, et une ressource de calcul nécessitant moins de calculs que si toutes les couronnes de l'image étaient générées de cette manière ;
■ qu'un second ensemble de couronnes sont remplacées par leur enveloppe rectangulaire prédéfinie de manière à générer une image moins couteuse en termes de puissance de calculs.

## Revendications

1. Procédé de génération d'une image en forme d'une portion de disque sur un afficheur, la portion de disque comprenant un centre (1) et un rayon maximal (R) définissant une limite de l'image générée, la portion de disque comprenant une pluralité de secteurs angulaires (2), chaque secteur angulaire comportant une pluralité de surfaces disjointes (13 ; 14), chaque surface disjointe d'un secteur angulaire étant délimitée par deux arcs de cercles définis entre deux rayons et deux droites formées respectivement par deux segments appartenant aux deux coté du secteur angulaire, lesdites surfaces étant appelées "couronnes", **caractérisé en ce que** chacune des couronnes a une enveloppe rectangulaire (10) prédéfinie et attribuée dont la surface couvre la surface de la couronne, et **en ce que** le procédé comprend :
une première étape de sélection d'une couronne ;
une seconde étape de comparaison de la surface de l'enveloppe rectangulaire attribuée à la couronne sélectionnée à au moins une valeur prédéfinie (3 ; 5), nommée grain ;
une troisième étape de génération d'un tracé correspondant à la surface de ladite couronne si la taille du grain (3 ; 5) est plus grande que l'enveloppe rectangulaire de la couronne sélectionnée lors du calcul de la seconde étape ou à la surface de l'enveloppe rectangulaire si la taille du grain (3 ; 5) est plus petite que l'enveloppe rectangulaire lors du calcul de la seconde étape.

2. Procédé de génération d'une image en forme d'une portion de disque selon la revendication 1, **caractérisé en ce que** le grain (3 ; 5) est une surface carrée dont le coté comprend une pluralité de pixels.

3. Procédé de génération d'une image en forme d'une portion de disque selon la revendication 1, **caractérisé en ce que** le grain (3 ; 5) est une donnée d'entrée configurable du procédé de l'invention.

4. Procédé de génération d'une image en forme d'une portion de disque selon la revendication 1, **caractérisé en ce que** l'image d'une couronne est monochrome.

5. Procédé de génération d'une image en forme d'une portion de disque selon la revendication 3, **caractérisé en ce que** la première fonction détermine des segments de l'image appartenant à l'enveloppe rectangulaire de la couronne sélectionnée, un segment étant défini par une portion de ligne horizontale ou verticale dont des pixels appartiennent à la couronne.

6. Procédé de génération d'une image en forme d'une portion de disque selon la revendication 5, **caractérisé en ce que** la première fonction comprend :
une étape de sélection de la première ligne de l'enveloppe rectangulaire définissant un segment ;
une étape de définition d'un segment correspondant à la ligne sélectionnée ;
une étape de sélection de la ligne suivante et de réitération des deux étapes précédentes jusqu'à ce que le dernier segment de l'enveloppe rectangulaire soit défini ;
une étape de tracé des segments de l'image contenu dans l'enveloppe rectangulaire de la couronne.

7. Procédé de génération d'une image en forme d'une portion de disque selon la revendication 6, **caractérisé en ce que** la seconde fonction détermine pour chacun des pixels de l'enveloppe rectangulaire de la couronne sélectionnée, lesquels appartiennent à la couronne, l'image générée comprenant tous les pixels appartenant à la couronne.

8. Procédé de génération d'une image en forme d'une portion de disque selon la revendication 7, **caractérisé en ce que** la seconde fonction comprend :
une étape de sélection de la première ligne de l'enveloppe rectangulaire d'une couronne ;
une étape de génération d'un premier segment de la première ligne comprenant des pixels appartenant à la couronne ;
une étape de sélection de la ligne suivante et de réitération des deux précédentes étapes jusqu'à ce que la dernière ligne soit traitée ;
une étape de génération de l'image contenue dans la couronne.

9. Procédé de génération d'une image en forme d'une portion de disque selon la revendication 7, **caractérisé en ce que** l'étape de génération d'un segment comprend :
une étape de sélection du premier pixel de la ligne sélectionnée;
une étape de mise à jour du segment à générer avec le pixel sélectionné ;
une étape de sélection du pixel suivant de la ligne sélectionnée et de réitération de l'étape précédente, jusqu'à ce que le dernier pixel sélectionné soit entièrement traité.

10. Procédé de génération d'une image en forme d'une portion de disque selon l'une quelconque des revendications 1 à 9, **caractérisé en ce que** lorsque tous les tracés de chaque couronne d'un secteur angulaire ont été générés, le procédé comprend une étape de génération d'une image, notée bitmap, du secteur angulaire et une étape d'affichage de l'image sur un afficheur.

11. Procédé de génération d'une image en forme d'une portion de disque selon l'une quelconque des revendications 1 à 9, **caractérisé en ce que** lorsque tous les tracés de chaque couronne d'un secteur angulaire ont été générés, le procédé comprend une étape de sélection d'une couronne du secteur angulaire suivant, le procédé étant réitéré.

## Claims

1. A method for generating an image in the form of a disc portion on a display, said disc portion including a centre (1) and a maximum radius (R) that defines a limit of the generated image, said disc portion comprising a plurality of angular sectors (2), each angular sector comprising a plurality of distinct surfaces (13; 14), each distinct surface of an angular sector being delimited by two circular arcs that are defined between two radii and two straight lines that are respectively formed by two segments that belong to the two sides of the angular sector, said surfaces being referred to as "crowns", **characterised in that** each crown has a predefined and assigned rectangular envelope (10), the surface of which covers the surface of the crown, and **in that** said method comprises:
a first step of selecting a crown;
a second step of comparing the surface of the rectangular envelope assigned to the selected crown with at least one predefined value (3; 5), referred to as grain;
a third step of generating a plot that corresponds to the surface of said crown if the size of the grain (3; 5) is larger than the rectangular envelope of the crown selected during the calculation of the second step or to the surface of the rectangular envelope if the size of the grain (3; 5) is smaller than the rectangular envelope during the calculation of the second step.

2. The method for generating an image in the form of a disc portion according to claim 1, **characterised in that** the grain (3; 5) is a square surface, the side of which comprises a plurality of pixels.

3. The method for generating an image in the form of a disc portion according to claim 1, **characterised in that** the grain (3; 5) is configurable input data of the method of the invention.

4. The method for generating an image in the form of a disc portion according to claim 1, **characterised in that** the image of a crown is monochrome.

5. The method for generating an image in the form of a disc portion according to claim 3, **characterised in that** the first function determines segments of the image that belong to the rectangular envelope of the selected crown, a segment being defined by a portion of a horizontal or vertical line the pixels of which belong to the crown.

6. The method for generating an image in the form of a disc portion according to claim 5, **characterised in that** the first function comprises:
a step of selecting the first line of the rectangular envelope that defines a segment;
a step of defining a segment that corresponds to the selected line;
a step of selecting the next line and of repeating the two preceding steps until the last segment of the rectangular envelope is defined;
a step of plotting segments of the image that are contained in the rectangular envelope of the crown.

7. The method for generating an image in the form of a disc portion according to claim 6, **characterised in that** the second function determines, for each of the pixels of the rectangular envelope of the selected crown which belong to the crown, the generated image that comprises all of the pixels that belong to the crown.

8. The method for generating an image in the form of a disc portion according to claim 7, **characterised in that** the second function comprises:
a step of selecting the first line of the rectangular envelope of a crown;
a step of generating a first segment of the first line that comprises pixels that belong to the crown;
a step of selecting the next line and of repeating the two preceding steps until the last line is processed;
a step of generating the image that is contained in the crown.

9. The method for generating an image in the form of a disc portion according to claim 7, **characterised in that** the step of generating a segment comprises:
a step of selecting the first pixel of the selected line;
a step of updating the segment to be generated with the selected pixel;
a step of selecting the next pixel of the selected line and of repeating the preceding step until the last selected pixel is fully processed.

10. The method for generating an image in the form of a disc portion according to any one of claims 1 to 9, **characterised in that** when all of the plots of each crown of an angular sector have been generated, the method comprises a step of generating an image, designated bitmap, of the angular sector and a step of displaying said image on a display.

11. The method for generating an image in the form of a disc portion according to any one of claims 1 to 9, **characterised in that** when all of the plots of each crown of an angular sector have been generated, the method comprises a step of selecting a crown of the next angular sector, said method being repeated.

## Patentansprüche

1. Verfahren zum Erzeugen eines Bildes in Form eines Scheibenabschnitts auf einem Display, wobei der Scheibenabschnitt einen Mittelpunkt (1) und einen maximalen Radius (R) beinhaltet, der eine Grenze des erzeugten Bilds definiert, wobei der Scheibenabschnitt mehrere Winkelsektoren (2) beinhaltet, wobei jeder Winkelsektor mehrere getrennte Flächen (13; 14) aufweist, wobei jede getrennte Fläche eines Winkelsektors durch zwei zwischen zwei Radien definierten Kreisbögen und zwei Geraden begrenzt wird, die jeweils durch zwei Segmente gebildet werden, die zu den zwei Seiten des Winkelsektors gehören, wobei die Flächen "Kronen" genannt werden, **dadurch gekennzeichnet, dass** jede Krone eine vordefinierte und zugeordnete rechteckige Hüllkurve (10) hat, deren Oberfläche die Oberfläche der Krone bedeckt, und **dadurch**, dass das Verfahren Folgendes beinhaltet:
einen ersten Schritt des Auswählens einer Krone;
einen zweiten Schritt des Vergleichens der Oberfläche der rechteckigen Hüllkurve, die der gewählten Krone zugeordnet ist, mit wenigstens einem vordefinierten Wert (3; 5), als Körnung bezeichnet;
einen dritten Schritt des Erzeugens einer Kurve, die der Oberfläche der Krone entspricht, wenn die Körnung (3; 5) größer ist als die rechteckige Hüllkurve der Krone, die bei der Berechnung des zweiten Schrittes ausgewählt wurde, oder der Oberfläche der rechteckigen Hüllkurve, wenn die Körnung (3; 5) kleiner ist als die rechteckige Hüllkurve bei der Berechnung des zweiten Schrittes.

2. Verfahren zum Erzeugen eines Bildes in Form eines Scheibenabschnitts nach Anspruch 1, **dadurch gekennzeichnet, dass** die Körnung (3; 5) eine quadratische Fläche ist, deren Seite mehrere Pixel umfasst.

3. Verfahren zum Erzeugen eines Bildes in Form eines Scheibenabschnitts nach Anspruch 1, **dadurch gekennzeichnet, dass** die Körnung (3; 5) ein konfigurierbares Eingabedatenelement des erfindungsgemäßen Verfahrens ist.

4. Verfahren zum Erzeugen eines Bildes in Form eines Scheibenabschnitts nach Anspruch 1, **dadurch gekennzeichnet, dass** das Bild einer Krone monochrom ist.

5. Verfahren zum Erzeugen eines Bildes in Form eines Scheibenabschnitts nach Anspruch 3, **dadurch gekennzeichnet, dass** die erste Funktion Segmente des Bildes ermittelt, die zu der rechteckigen Hüllkurve der gewählten Krone gehören, wobei ein Segment durch einen Abschnitt einer horizontalen oder vertikalen Linie definiert wird, deren Pixel zu der Krone gehören.

6. Verfahren zum Erzeugen eines Bildes in Form eines Scheibenabschnitts nach Anspruch 5, **dadurch gekennzeichnet, dass** die erste Funktion Folgendes beinhaltet:
einen Schritt des Auswählens der ersten Linie der rechteckigen Hüllkurve, die ein Segment definiert;
einen Schritt des Definierens eines Segments, das der gewählten Linie entspricht;
einen Schritt des Auswählens der nächsten Linie und des Wiederholens der beiden vorherigen Schritte, bis das letzte Segment der rechteckigen Hüllkurve definiert ist;
einen Schritt des Plottens von Segmenten des Bildes, die in der rechteckigen Hüllkurve der Krone enthalten sind.

7. Verfahren zum Erzeugen eines Bildes in Form eines Scheibenabschnitts nach Anspruch 6, **dadurch gekennzeichnet, dass** die zweite Funktion für jedes der zu der Krone gehörenden Pixel der rechteckigen Hüllkurve der gewählten Krone das erzeugte Bild ermittelt, das alle Pixel beinhaltet, die zu der Krone gehören.

8. Verfahren zum Erzeugen eines Bildes in Form eines Scheibenabschnitts nach Anspruch 7, **dadurch gekennzeichnet, dass** die zweite Funktion Folgendes beinhaltet:
einen Schritt des Auswählens der ersten Linie der rechteckigen Hüllkurve einer Krone;
einen Schritt des Erzeugens eines ersten Segments der ersten Linie, die Pixel umfasst, die zu der Krone gehören;
einen Schritt des Auswählens der nächsten Linie und des Wiederholens der beiden vorherigen Schritte, bis die letzte Linie verarbeitet ist;
einen Schritt des Erzeugens des Bildes, das in der Krone enthalten ist.

9. Verfahren zum Erzeugen eines Bildes in Form eines Scheibenabschnitts nach Anspruch 7, **dadurch gekennzeichnet, dass** der Schritt des Erzeugens eines Segments Folgendes beinhaltet:
einen Schritt des Auswählens des ersten Pixels der gewählten Linie;
einen Schritt des Aktualisierens des Segments, das mit dem gewählten Pixel erzeugt werden soll;
einen Schritt des Auswählens des nächstens Pixels der gewählten Linie und des Wiederholens des vorherigen Schrittes, bis das letzte gewählte Pixel vollständig verarbeitet ist.

10. Verfahren zum Erzeugen eines Bildes in Form eines Scheibenabschnitts nach einem der Ansprüche 1 bis 9, **dadurch gekennzeichnet, dass** das Verfahren, wenn alle Kurven jeder Krone eines Winkelsektors erzeugt sind, einen Schritt des Erzeugens eines Bildes, als Bitmap bezeichnet, des Winkelsektors und einen Schritt des Anzeigens des Bildes auf einem Display beinhaltet.

11. Verfahren zum Erzeugen eines Bildes in Form eines Scheibenabschnitts nach einem der Ansprüche 1 bis 9, **dadurch gekennzeichnet, dass**, wenn alle Kurven jeder Krone eines Winkelsektors erzeugt sind, das Verfahren einen Schritt des Wählens einer Krone des nächsten Winkelsektors beinhaltet, wobei das Verfahren wiederholt wird.
